# FASCICULE DE BREVET EUROPEEN

(11) **EP 3 396 191 B1**
(45) Date de publication et mention de la délivrance du brevet: **15.05.2019**
(21) Numéro de dépôt: 18166193.5
(22) Date de dépôt: 06.04.2018
(51) Int. Cl.: F16D 13/75

(54) **MECANISME D'EMBRAYAGE, NOTAMMENT POUR VEHICULE AUTOMOBILE**
KUPPLUNGSMECHANISMUS, INSBESONDERE FÜR KRAFTFAHRZEUG
CLUTCH MECHANISM, IN PARTICULAR FOR A MOTOR VEHICLE

(30) Priorité: 26.04.2017 FR 1753627
(43) Date de publication de la demande: 31.10.2018
(73) Titulaire: Valeo Embrayages, 80009 Amiens cedex 2 (FR)
(72) Inventeur: DELIENCOURT, Nicolas, 80009 AMIENS (FR); PERRY, Benoit, 95892 CERGY PONTOISE CEDEX (FR)
(74) Mandataire: Vincent, Catherine Marie Marguerite

(56) Documents cités:
- DE-A1-102008 051 100
- DE-A1-102011 087 994
- FR-A1- 2 765 287

## Description

La présente invention concerne un mécanisme d'embrayage, notamment pour véhicule automobile.

La présente invention concerne un mécanisme d'embrayage à rattrapage d'usure, notamment pour véhicule automobile.

Un dispositif d'embrayage comporte classiquement un plateau de réaction, un mécanisme d'embrayage comportant un plateau de pression mobile, et un disque de friction monté entre lesdits plateaux de réaction et de pression. Le mouvement du plateau de pression est commandé par un diaphragme, lui-même commandé par une butée d'embrayage.

Le plateau de pression est ainsi mobile entre une position d'embrayage dans laquelle le disque de friction est serré entre lesdits plateaux de pression et de réaction, et une position de débrayage dans laquelle le disque de friction est libéré.

L'utilisation du dispositif d'embrayage provoque une usure des garnitures du disque de friction ainsi que des contre-matériaux des plateaux de pression et de réaction associés. Ceci se traduit par une variation de la position du plateau de pression par rapport au diaphragme associé et/ou par rapport au plateau de réaction, générant une variation de l'effort de serrage du disque de friction et une modification du point de léchage et de la course de la butée d'embrayage. On rappelle que le point de léchage est la position à partir de laquelle un couple peut être transmis progressivement au travers du dispositif d'embrayage.

Un dispositif d'embrayage à rattrapage d'usure est connu du document FR 2 765 287 au nom de la Demanderesse. Ce document divulgue un dispositif d'embrayage à rattrapage d'usure pour véhicule automobile, comportant un plateau de pression destiné à venir en appui sur un disque de friction du dispositif d'embrayage, un diaphragme servant à l'actionnement du plateau de pression entre une position totalement embrayée dans laquelle ledit plateau de pression est poussé contre le disque de friction, et une position totalement débrayée dans laquelle ledit plateau de pression est écarté du disque de friction par l'intermédiaire de moyens de rappel du plateau de pression.

Le plateau de pression, le disque de friction et le diaphragme sont logés dans un couvercle qui est fixe par rapport au plateau de réaction.

Le dispositif comporte en outre un organe de rattrapage de l'usure du disque de friction, intercalé entre le diaphragme et le plateau de pression, et mobile en rotation autour d'un axe dans une plage déterminée, ledit organe de rattrapage comportant une rampe coopérant avec une contre-rampe formée ou solidaire du plateau de pression, de façon à ajuster la distance entre le diaphragme et le plateau de pression et compenser l'usure du disque de friction en fonction de la position de la rampe par rapport à la contre-rampe.

Le dispositif d'embrayage comporte en outre des moyens de déplacement comprenant une roue à rochet apte à pivoter autour d'un axe monté sur une cassette. Les moyens de déplacement comportent également un organe élastique fixé sur la cassette, ledit organe élastique comportant une zone d'actionnement coopérant avec la roue à rochet de manière à actionner le pivotement de la roue à rochet en cas d'usure. La zone d'actionnement est formée sur un organe d'actionnement de l'organe élastique.

La roue à rochet est couplée en rotation à une vis sans fin montée autour de l'axe précité et engrenant avec un secteur denté solidaire de l'organe de rattrapage. Ainsi, la rotation de la roue à rochet entraîne le déplacement de l'organe de rattrapage de façon à compenser l'usure.

L'organe élastique est actionné par le diaphragme, lors de son déplacement entre ses positions embrayée et débrayée.

Le document DE 10 2008 051 100 divulgue un dispositif d'embrayage à rattrapage d'usure dans lequel les moyens de déplacement de l'organe de rattrapage d'usure comportent une tige filetée montée pivotante dans une cassette, ladite cassette étant solidaire du plateau de pression. La tige filetée est solidaire d'une roue à rochet entraînée en rotation par un organe élastique. La tige filetée coopère avec un chariot taraudé solidaire de l'organe de rattrapage. Ainsi, la rotation de la roue à rochet et de la tige filetée entraîne le déplacement de l'organe de rattrapage d'usure, par coopération entre la tige filetée et le chariot. Le chariot translate par rapport à l'axe de la roue à rochet.

Dans les solutions techniques précitées, un grand nombre de pièces sont mises en mouvement pour effectuer une opération de rattrapage d'usure. Cela génère des frottements internes qui nuisent au bon fonctionnement du dispositif d'embrayage à rattrapage d'usure. L'invention vise à réduire le nombre de composants.

L'invention vise à proposer un dispositif et un mécanisme d'embrayage de structure simple, économique et fiable.

A cet effet, elle propose un mécanisme d'embrayage, notamment pour véhicule automobile, comportant :
- un couvercle,
- un plateau de pression mobile par rapport au couvercle selon un axe du mécanisme, et destiné à coopérer avec un disque de friction,
- un diaphragme mobile entre une position embrayée et une position débrayée, apte à actionner le déplacement du plateau de pression,
- des moyens de rattrapage d'usure intercalés entre le diaphragme et le plateau de pression, lesdits moyens de rattrapage comportant des moyens à rampe coopérant avec des moyens à contre-rampe de façon à ce que la rotation des moyens à rampe par rapport aux moyens à contre-rampe modifie la distance entre le diaphragme et le plateau de pression, et des moyens d'entraînement en rotation des moyens à rampe, lesdits moyens d'entraînement comportant un écrou coopérant avec une tige filetée selon un axe principal, caractérisé en ce que l'écrou est lié aux moyens à rampe, ou respectivement au plateau de pression, et apte à pivoter autour de son axe principal, la tige filetée étant insérée dans le plateau de pression ou respectivement dans les moyens à rampe, de façon à entraîner la rotation des moyens à rampe par rapport au plateau de pression, par rotation de l'écrou autour de la tige filetée, la tige filetée étant fixe en rotation selon l'axe principal.

Selon l'invention, c'est la rotation de l'écrou qui entraîne le déplacement de la tige filetée, provoquant alors le déplacement relatif des moyens à rampe par rapport au plateau de pression, de façon à compenser l'usure du disque de friction.

L'écrou peut être monté dans une cassette fixée sur les moyens à rampe ou sur le plateau de pression.

La cassette peut former un support permettant de maintenir l'écrou en position circonférentielle sur les moyens à rampe ou sur le plateau de pression, tout en autorisant la rotation de l'écrou autour de l'axe de ce dernier.

La cassette peut comporter une base à partir de laquelle s'étendent deux flancs écartés circonférentiellement l'un par rapport à l'autre, l'écrou étant monté circonférentiellement entre les flancs de la cassette.

Les flancs permettent de maintenir circonférentiellement l'écrou en position tandis que la base peut servir à la fixation de la cassette sur les moyens à rampe ou sur le plateau de pression, directement ou indirectement.

La tige filetée peut être arrêtée en rotation par la cassette. La tige filetée peut être arrêtée en rotation à tout autre élément solidaire des moyens à rampe ou du plateau de pression.

La tige filetée peut passer au travers de l'écrou.

La tige filetée peut être arrêtée en rotation par coopération de forme entre la tige filetée et au moins l'un des flancs de la cassette.

La coopération de forme peut être réalisée à l'aide d'un méplat ou d'un doigt engagé dans une rainure.

L'écrou peut comprendre des moyens d'entraînement formés à sa périphérie externe, les moyens d'entraînement de l'écrou comportant une roue à rochet coopérant avec des moyens d'encliquetage, lesdits moyens d'encliquetage étant aptes à actionner la rotation de la roue à rochet en cas d'usure du disque de friction.

La roue à rochet et l'écrou peuvent former une seule et même pièce, ou être formés par deux pièces solidaires l'une de l'autre, par exemple.

Les moyens d'encliquetage peuvent comporter un organe élastique comprenant une zone d'actionnement maintenue en appui sur une denture de la roue à rochet.

L'organe élastique peut être élastiquement déformable.

La tige filetée peut passer au travers de la roue à rochet.

Le mécanisme peut comporter des moyens d'anti-rotation aptes à autoriser la rotation de l'écrou et/ou de la roue à rochet dans un unique sens de rotation.

L'organe élastique peut comprendre un organe d'actionnement sur lequel est formée la zone d'actionnement.

Les moyens d'anti-rotation peuvent comporter au moins deux lamelles élastiques, maintenues en appui sur la denture de la roue à rochet, dans des zones situées à des distances différentes l'une de l'autre par rapport à l'axe de rotation de la roue à rochet.

La tige filetée peut comporter une partie engagée dans une rainure du plateau de pression, ladite rainure s'étendant dans la direction radiale par rapport à l'axe de rotation des moyens à rampe.

La partie correspondante de la tige filetée tend à se déplacer le long de la rainure lors du déplacement relatif de la tige filetée par rapport à l'écrou, c'est-à-dire au fur et à mesure que l'usure du disque de friction est compensée.

La tige filetée peut être conçue pour être déplacée selon un mouvement de translation par rapport à la roue à rochet.

La tige filetée peut comporter une partie engagée dans une ouverture des moyens à rampe.

La tige filetée peut présenter une portion coudée, ladite portion coudée étant insérée dans l'ouverture des moyens à rampe.

Ladite ouverture des moyens à rampe peut s'étendre selon l'axe de rotation des moyens à rampe.

L'invention concerne également un dispositif comprenant un mécanisme d'embrayage du type précité, caractérisé en ce qu'il comporte un plateau de réaction et un disque de friction, le plateau de pression étant mobile par rapport au plateau de réaction, entre une position embrayée dans laquelle le disque de friction est serré entre le plateau de pression et le plateau de réaction, et une position débrayée, dans laquelle le disque de friction est libéré.

Le mécanisme ou le dispositif d'embrayage peuvent comporter l'une ou plusieurs des caractéristiques suivantes :
- le dispositif comporte un couvercle fixe par rapport au plateau de réaction, le diaphragme étant apte à pivoter autour d'une zone d'appui du couvercle,
- le diaphragme est maintenu en appui sur le couvercle par l'intermédiaire de moyens élastiques, par exemple une rondelle élastique,
- la diaphragme comporte une partie annulaire à partir de laquelle des doigts s'étendent radialement vers l'intérieur,
- la périphérie radialement interne des doigts est apte à coopérer avec une butée d'embrayage,
- le diaphragme est centré par rapport au couvercle par l'intermédiaire de rivets ou de plots fixés sur le couvercle ou formés avec ledit couvercle,
- le couvercle comporte une partie annulaire s'étendant radialement dont la périphérie radialement externe est prolongée par une partie cylindrique,
- le couvercle délimite un volume interne logeant, au moins en partie, le diaphragme, les moyens à rampe, les moyens d'entraînement en rotation des moyens à rampe, et le plateau de pression,
- la tige comporte une zone non circulaire ou non cylindrique, par exemple un méplat, une forme polygonale ou une encoche, coopérant avec une zone de forme complémentaire de la cassette, de manière à coupler en rotation la tige et la cassette,
- la tige comporte une première partie et une seconde partie perpendiculaires l'une par rapport à l'autre, la première partie comportant une zone filetée coopérant avec l'écrou, la seconde partie étant en prise avec le plateau de pression ou avec les moyens à rampe,
- la roue à rochet est apte à venir en appui sur l'un au moins des flancs de la cassette,
- la roue à rochet est apte à venir en appui sur les deux flancs de la cassette,
- un élément élastique est monté entre la roue à rochet et l'un des flancs de la cassette, ledit élément élastique tendant à écarter la roue à rochet dudit flanc, en direction de l'autre flanc de la cassette,
- l'élément élastique est un ressort de compression, par exemple un ressort hélicoïdal,
- les moyens à rampe comportent un organe annulaire comprenant une première extrémité axiale comportant des rampes, en appui sur des contre-rampes formées sur le plateau de pression ou fixes par rapport au plateau de pression, et une seconde extrémité axiale, opposée à la première extrémité, le diaphragme étant apte à prendre appui sur ladite seconde extrémité,
- l'organe annulaire des moyens à rampe est centré sur le plateau de pression par l'intermédiaire de plots, par exemple des plots solidaires ou formés intégralement avec le plateau de pression,
- la cassette est fixée aux moyens à rampe par l'intermédiaire de vis ou de rivets,
- la base de la cassette comporte deux zones de fixation s'étendant circonférentiellement au-delà des flancs,
- l'organe élastique est fixé à la cassette, en particulier à la base de la cassette, par exemple par rivetage ou par soudage,
- l'organe élastique est fixé au couvercle, en particulier à la partie annulaire radiale du couvercle, par exemple par rivetage,
- l'organe élastique comporte une première partie s'étendant axialement, fixée à la cassette, une deuxième partie s'étendant radialement vers l'extérieur depuis la première partie, et une troisième partie formant l'organe d'actionnement et s'étendant axialement depuis la deuxième partie, l'extrémité libre de la troisième partie formant la zone d'actionnement maintenue en appui sur une denture de la roue à rochet,
- l'organe élastique est actionné par le déplacement du diaphragme entre ses positions embrayée et débrayée,
- en variante, l'organe élastique est actionné par le déplacement du plateau de pression entre ses positions embrayée et débrayée, l'organe élastique étant en appui directement sur les moyens à rampe,
- l'organe élastique est en appui sur la périphérie radialement externe du diaphragme,
- la zone de liaison entre la deuxième partie et la troisième partie de l'organe élastique est en appui sur le diaphragme,
- l'organe élastique comporte une portion d'appui décalée radialement vers l'intérieur par rapport à la zone d'actionnement, ladite portion d'appui étant apte à prendre appui sur le diaphragme,
- les moyens d'anti-rotation comportent au moins deux parties se présentant chacune sous la forme d'une tôle, lesdites tôles étant empilées l'une sur l'autre,
- chaque tôle comporte au moins une lamelle élastique, de préférence au moins deux lamelles élastiques,
- l'organe élastique est fixé au couvercle, par exemple par rivetage,
- l'organe élastique est formé par la superposition de plusieurs tôles élastiques.

L'invention sera mieux comprise et d'autres détails, caractéristiques et avantages de l'invention apparaîtront à la lecture de la description suivante faite à titre d'exemple non limitatif en référence aux dessins annexés dans lesquels :
- les figures 1 à 10 illustrent un mécanisme d'embrayage et un dispositif d'embrayage selon une première forme de réalisation de l'invention, en particulier :
   - la figure 1 est une vue en perspective avec écorché partiel du mécanisme,
   - la figure 2 est une vue en perspective d'une partie du dispositif,
   - la figure 3 est une vue en coupe axiale d'une partie du dispositif,
   - la figure 4 est une vue de détail et en coupe radiale du mécanisme,
   - la figure 5 est une vue en coupe axiale d'une partie du mécanisme,
   - la figure 6 est une vue en coupe axiale d'une partie du mécanisme,
   - les figures 7 et 8 sont des vues correspondant à la figure 6, représentant deux autres variantes de réalisation,
   - la figure 9 est une vue de détail de la figure 2, illustrant le mécanisme avant usure,
   - la figure 10 est une vue correspondant à la figure 8, illustrant le mécanisme après usure du disque de friction et compensation de ladite usure,
- les figures 11 à 23 illustrent un mécanisme d'embrayage selon une seconde forme de réalisation de l'invention, en particulier :

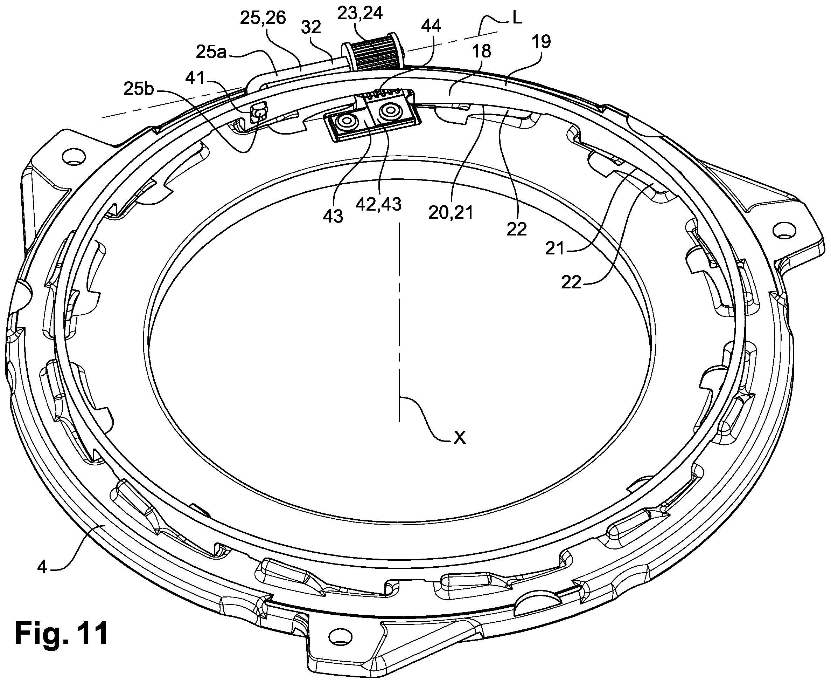

   - la figure 11 est une vue en perspective d'une partie du mécanisme,

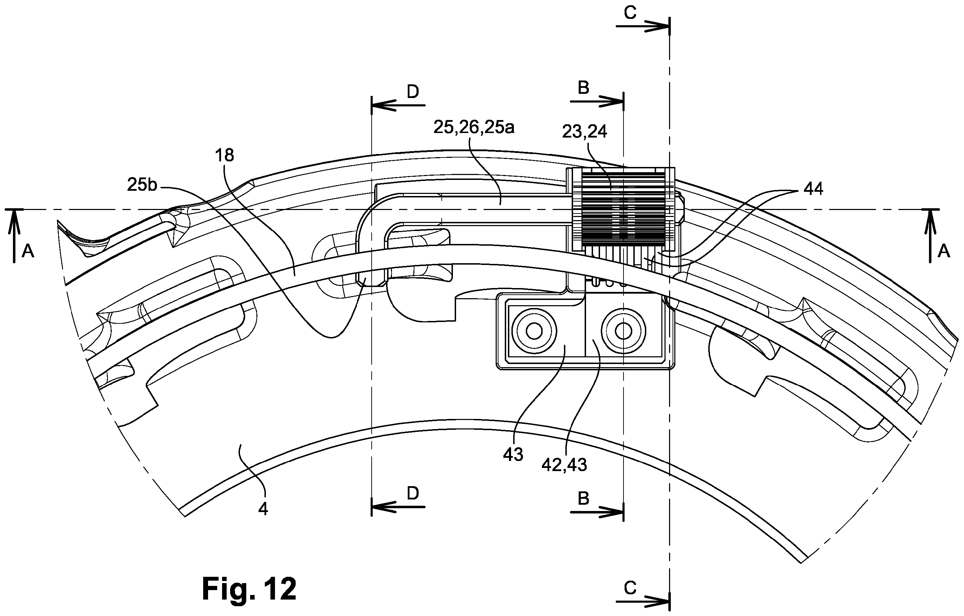

   - la figure 12 illustre une vue de face et de détail d'une partie du mécanisme,

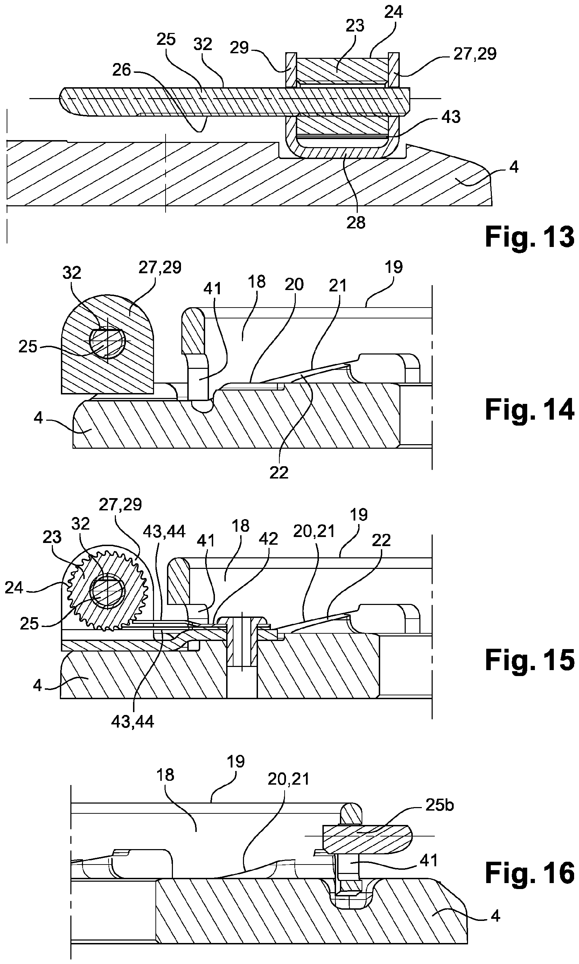

   - la figure 13 est une vue en coupe selon la ligne A-A de la figure 12,
   - la figure 14 est une vue en coupe selon la ligne B-B de la figure 12,
   - la figure 15 est une vue en coupe selon la ligne C-C de la figure 12,
   - la figure 16 est une vue en coupe selon la ligne D-D de la figure 12.

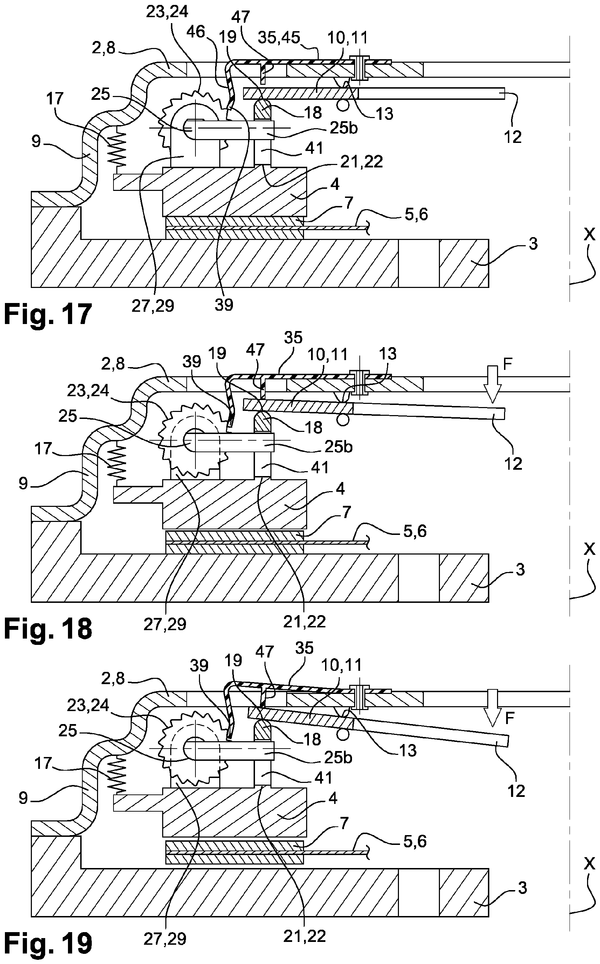

   - les figures 17 à 21 sont des vues schématiques et en coupe en axiale, d'une partie du mécanisme, illustrant différentes étapes de fonctionnement du mécanisme,

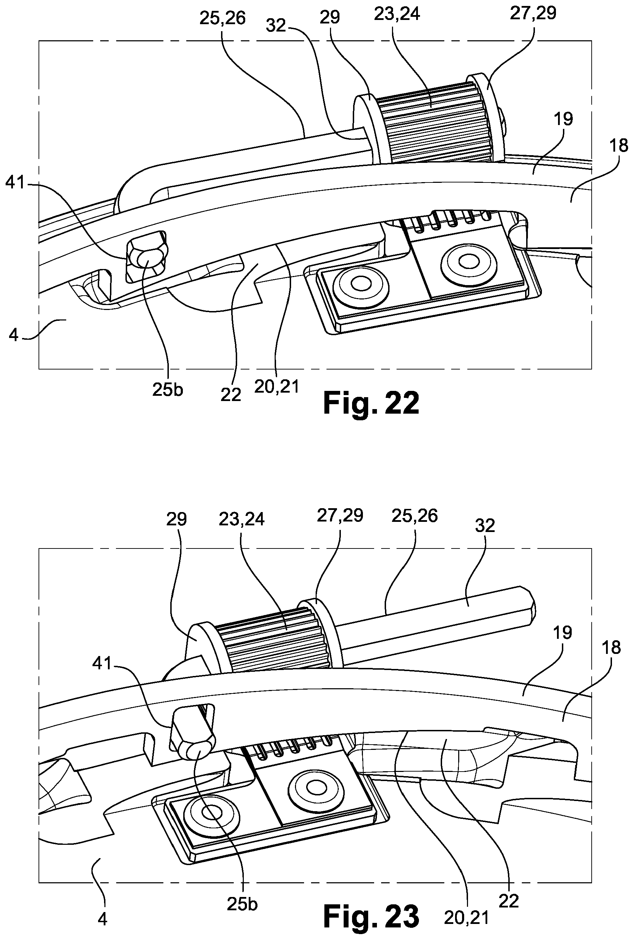

   - la figure 22 est une vue de détail de la figure 11, illustrant le mécanisme avant usure,
   - la figure 23 est une vue correspondant à la figure 22, illustrant le mécanisme après usure du disque de friction et compensation de ladite usure.

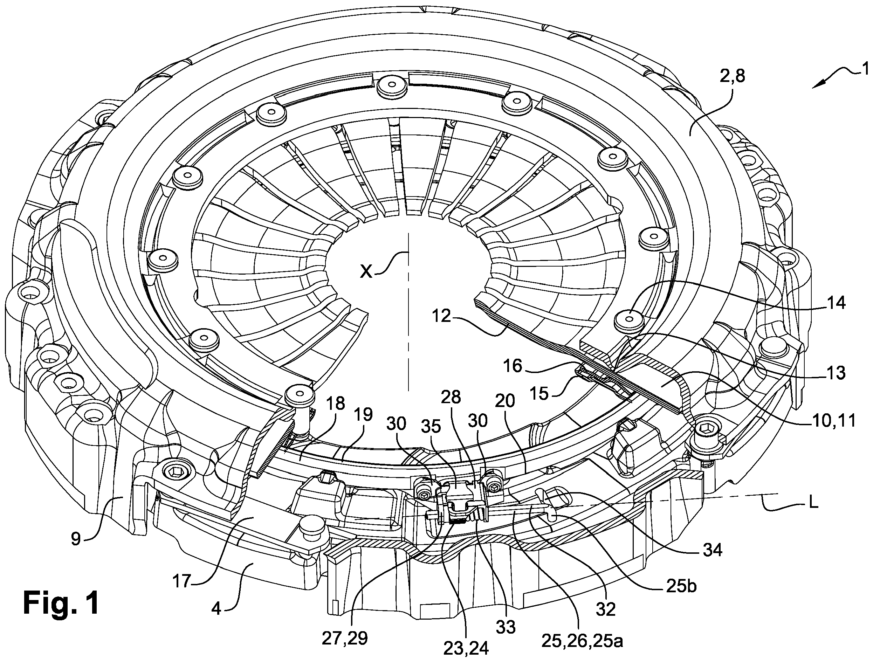

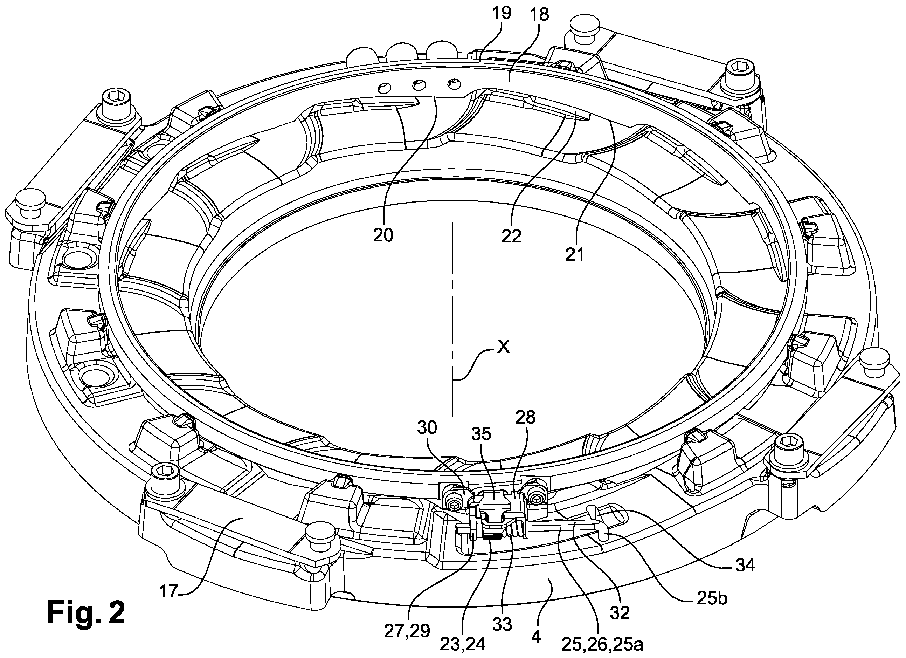

Les figures 1 à 10 illustrent un mécanisme d'embrayage et un dispositif d'embrayage selon une première forme de réalisation de l'invention.

Le dispositif d'embrayage 1 comporte un couvercle fixe 2 annulaire d'axe X, destiné à être fixé sur un plateau de réaction 3, et un plateau de pression 4 annulaire et mobile selon l'axe X par rapport au plateau de réaction 3 et au couvercle 2. Un disque de friction 5 est destiné à être intercalé axialement entre le plateau de pression 4 et le plateau de réaction 3. Le disque de friction 5 comporte un support 6 de part et d'autre duquel sont fixées des garnitures de friction 7.

Le couvercle 2 comporte une partie annulaire 8 s'étendant globalement radialement et une partie globalement cylindrique 9, s'étendant axialement depuis la périphérie radialement externe de la partie annulaire radiale 8.

Le dispositif 1 comporte de plus un diaphragme 10 comprenant une partie annulaire 11 déformable, à la manière d'une rondelle Belleville, à partir de laquelle des doigts d'actionnement 12 s'étendent radialement vers l'intérieur. La périphérie radialement interne des doigts 12 est apte à coopérer avec une butée d'embrayage, comme cela est connu en soi. Le diaphragme 10 est monté en appui sur le couvercle 2, au niveau de zones d'appui 13. Les zones d'appui 13 sont réparties sur la circonférence et sont formées par des zones en saillie de la partie annulaire radiale 8 du couvercle 2.

Le diaphragme 10 est centré par l'intermédiaire de plots 14 ou de rivets, fixés sur la partie radiale 8 du couvercle 2.

Le diaphragme 10 est maintenu en appui sur lesdites zones d'appui 13 du couvercle 2, par l'intermédiaire d'un organe d'appui formé ici par une rondelle rigide 15 fixée au plot à l'opposé du couvercle 2 par rapport au diaphragme 10, et d'un organe élastique, formé ici par une rondelle 16 élastiquement déformable. La rondelle élastique 16 est en appui d'une part sur la rondelle rigide 15 et d'autre part sur le diaphragme 10, de façon à exercer un effort de rappel sur le diaphragme 10, tendant à le maintenir en appui sur les zones d'appui 13 du couvercle 2.

Une telle rondelle rigide 15 et une telle rondelle élastique 16 sont notamment connues du document WO2008/125780.

Le diaphragme 10 sert à l'actionnement du plateau de pression 4 entre une position totalement embrayée dans laquelle ledit plateau de pression 4 est poussé vers le plateau de réaction 3, de façon à enserrer le disque de friction 5 entre lesdits plateaux 3, 4, et une position débrayée dans laquelle ledit plateau de pression 4 est écarté du plateau de réaction 3 de façon à libérer le disque de friction 5. A cet effet, des languettes élastiques 17 aptes à exercer un effort axial relient le couvercle 2 et le plateau de pression 4. Les languettes 17 sont agencées de façon à rappeler élastiquement le plateau de pression 4 vers sa position débrayée. Les languettes 17 assurent également un couplage en rotation entre le couvercle 2 et le plateau de réaction 3, d'une part, et le plateau de pression 4, d'autre part.

Des moyens de rattrapage d'usure sont intercalés axialement entre le plateau de pression 4 et le diaphragme 10. Plus particulièrement, le diaphragme 10 vient coopérer avec lesdits moyens de rattrapage d'usure dans une zone située radialement à l'extérieur des zones d'appui 13 dudit diaphragme 10 sur le couvercle 2.

Ces moyens comportent un organe de rattrapage mobile 18 se présentant sous la forme d'un anneau et comportant une extrémité 19 contre laquelle le diaphragme 10 est apte à venir en appui, et une extrémité 20 comportant au moins une rampe 21 s'étendant circonférentiellement, coopérant avec une contre-rampe 22 associée, ménagée directement sur le plateau de pression 4.

A titre d'exemple, l'angle de chaque rampe 21 de l'organe de rattrapage 18 et de la contre-rampe 22 associée du plateau de pression 4 est compris entre 2° et 12°.

L'organe de rattrapage 18 forme des moyens à rampe.

Des moyens de déplacement permettent d'entraîner en rotation l'organe de rattrapage 18 autour de l'axe X, en cas d'usure du disque de friction 5.

Les moyens de déplacement comportent une roue à rochet 23 comportant une denture externe 24 et un taraudage interne de manière à former un écrou, et une tige 25 comportant une zone filetée 26 coopérant avec la roue à rochet 23.

L'écrou 13 comprend des moyens d'entraînement formés sur sa périphérie externe.

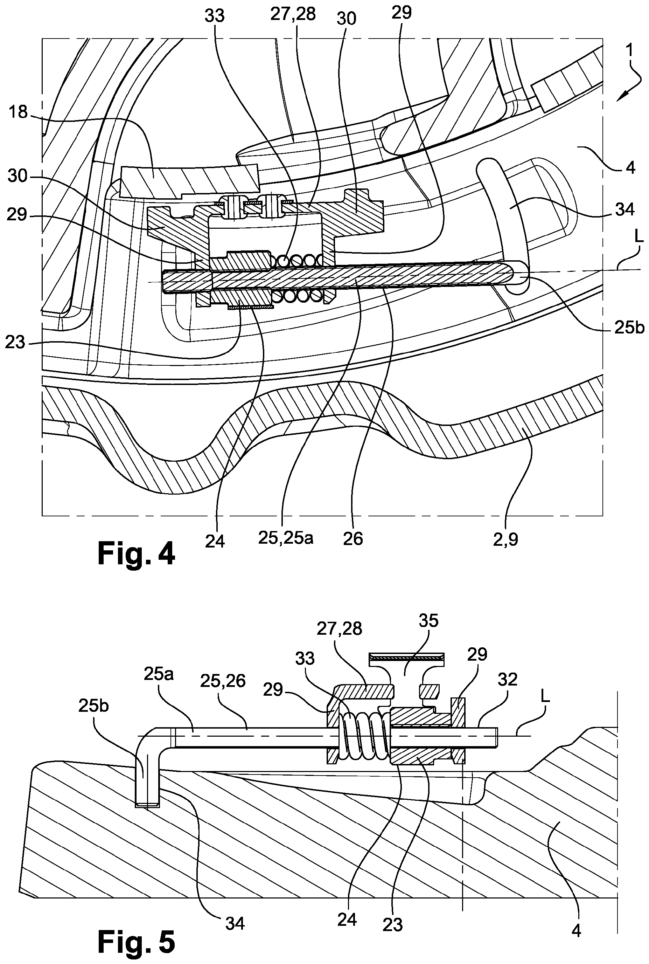

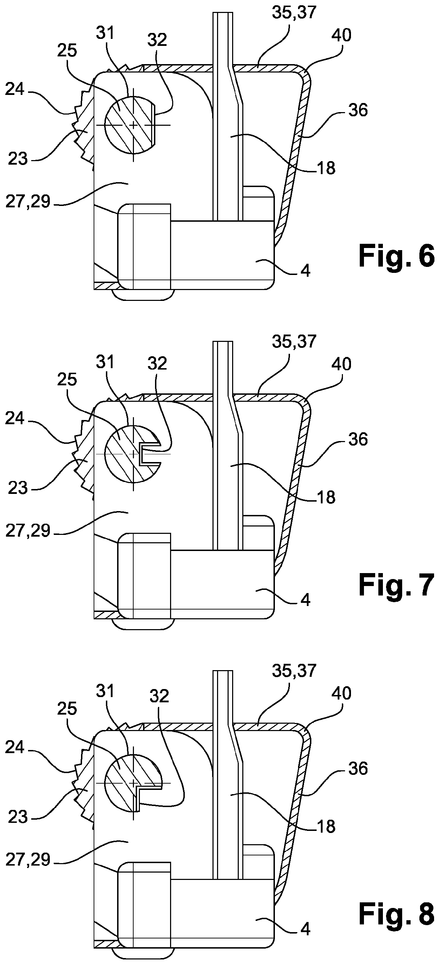

La roue à rochet 23 est montée dans une cassette 27 formant un support. La cassette 27 comporte une base plane 28, à partir de laquelle s'étendent deux flancs 29, perpendiculairement à la base 28 (voir notamment figure 4). Les flancs 29 s'étendent radialement. La base 28 comporte deux zones latérales 30 s'étendant circonférentiellement au-delà des flancs 29. Lesdites zones latérales permettent la fixation de la cassette 27 à l'organe de rattrapage 18, par l'intermédiaire de vis. Les flancs 29 comportent des trous 31 permettant le passage de la tige filetée 25. La tige filetée 25 et au moins l'un des trous 31 présentent au moins une zone 32 de section non circulaire, de manière à arrêter en rotation la cassette 27 et la tige filetée 25 (voir notamment figures 6 à 8).

La roue à rochet 23 est montée circonférentiellement entre les flancs 29 tout en étant apte à pivoter autour de son axe, autour de la tige filetée 25. La roue à rochet 23 est en appui sur l'un des flancs 29, directement ou par l'intermédiaire d'une rondelle de frottement. Un élément élastique, tel par exemple qu'un ressort de compression hélicoïdal 33, est monté entre l'autre flanc 29 et la roue à rochet 23, de manière à maintenir la roue à rochet 23 en appui sur le flanc 29 opposé.

La tige filetée 25 comporte une première partie 25a et une seconde partie 25b s'étendant perpendiculairement l'une par rapport à l'autre. La première partie 25a comporte la zone filetée 26 engagée dans le taraudage de la roue à rochet 23, la première partie 25a traversant les trous 31 des flancs 29. L'extrémité libre de la seconde partie 25b est engagée dans une rainure 34 du plateau de pression 4.

Le déplacement de la tige filetée 25 par rapport à la cassette 27 entraîne ainsi la rotation de l'organe de rattrapage 18 par rapport au plateau de pression 4, de sorte que l'extrémité 19 de l'organe de rattrapage 18 s'écarte axialement du plateau de pression 4, de façon à compenser l'usure du disque de friction 5.

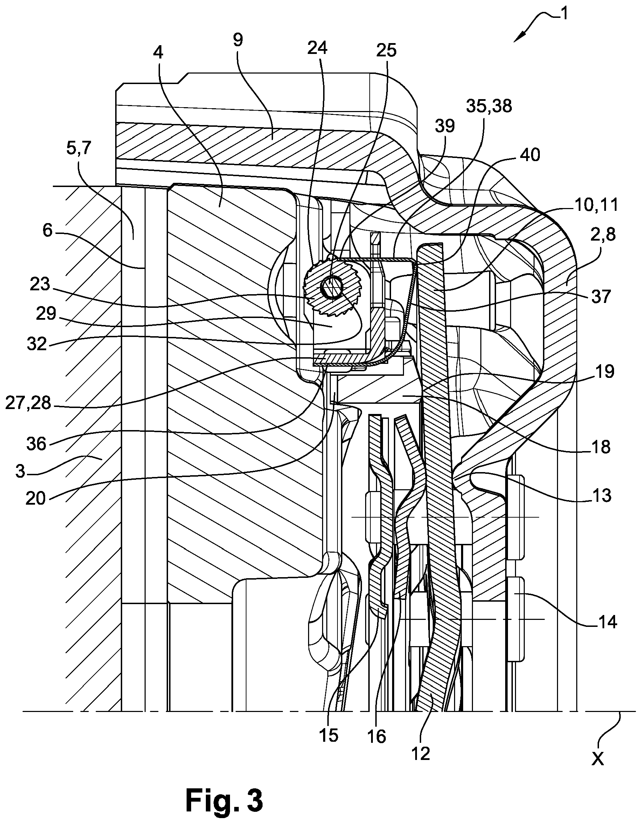

Les moyens de déplacement comportent en outre un organe élastique 35 qui est élastiquement déformable. L'organe élastique, également désigné ci-après cliquet 35, comporte (voir notamment figure 3) une première partie 36 s'étendant axialement, fixée à la base de la cassette 27, par exemple par l'intermédiaire de rivets, une deuxième partie 37 s'étendant radialement vers l'extérieur depuis la première partie 36, et une troisième partie 38 formant un organe d'actionnement, s'étendant axialement depuis la deuxième partie 37, l'extrémité libre de la troisième partie 38 formant une zone d'actionnement 39 maintenue en appui sur la denture 24 de la roue à rochet 23.

La zone de liaison 40 entre la deuxième partie 37 et la troisième partie 38 du cliquet 35 est en appui sur la périphérie radialement externe du diaphragme 10.

Le cliquet 35 est actionné par le déplacement du diaphragme 10 entre ses positions embrayée et débrayée.

En particulier, le cliquet 35 écarté élastiquement de sa position de repos lors de l'actionnement du diaphragme 10 vers sa position embrayée.

En fonctionnement, lorsque le disque de friction 5 n'est pas ou peu usé, la zone d'actionnement 39 du cliquet 35 glisse le long d'une dent 24 sans toutefois sauter une dent 24, lorsque le cliquet 35 est actionné par le diaphragme 10.

Lorsque le disque de friction 5 présente une certaine usure et lors de l'actionnement du cliquet 35, le cliquet 35 saute une dent 24 en position débrayée après avoir tourné légèrement la roue à rochet en position embrayée de sorte que, lors du prochain actionnement du cliquet 35, la zone d'actionnement prend appui sur l'épaulement formé entre deux dents 24 de façon à faire tourner la roue à rochet 23 autour de son axe.

Un tel pivotement de la roue à rochet 23 intervient en phase d'embrayage. Lors d'une telle phase, le diaphragme 10 plaque l'organe de rattrapage 18 en appui sur le plateau de pression 4, de sorte que l'organe de rattrapage 18 ne peut pas pivoter par rapport au plateau de pression 4. En conséquence, lors de cette phase d'embrayage, la tige filetée 25 ne peut pas se déplacer en translation selon l'axe de la première partie 25a, par rapport à la cassette 27, et la roue à rochet 23 se déplace en translation par rapport à la tige filetée 25, le long de l'axe de la roue à rochet 23. La roue à rochet 23 est ainsi animée d'un mouvement hélicoïdal combinant un mouvement de rotation autour de son axe, autour de la partie 25a de la tige filetée, et un mouvement de translation par rapport à la tige filetée 25. Un tel mouvement de translation comprime l'élément élastique 33.

Lors de la phase de débrayage suivante, le diaphragme 10 relâche l'organe de rattrapage 18. Lors de cette phase, l'élément élastique 33 repousse en translation la roue à rochet 23 en appui sur le flanc 29 correspondant de la cassette 27. Ceci provoque le déplacement en translation de la tige filetée 25 par rapport à la cassette 27 et, du fait de liaison entre la tige filetée 25 et le plateau de pression 4, la rotation de l'organe de rattrapage 18 sur lequel est fixé à la cassette 27, par rapport au plateau de pression 4.

Une telle rotation de l'organe de rattrapage 18 par rapport au plateau de pression 4 provoque un coulissement des rampes 21 sur les contre-rampes 22 et, ainsi, un écartement selon l'axe X du diaphragme 10 par rapport au plateau de pression 4, d'une valeur permettant de compenser l'usure.

Lors d'une telle rotation de l'organe de rattrapage 18 par rapport au plateau de pression 4, la seconde partie 25b de la tige filetée 25 se déplace le long de la rainure 34 du plateau de pression 4.

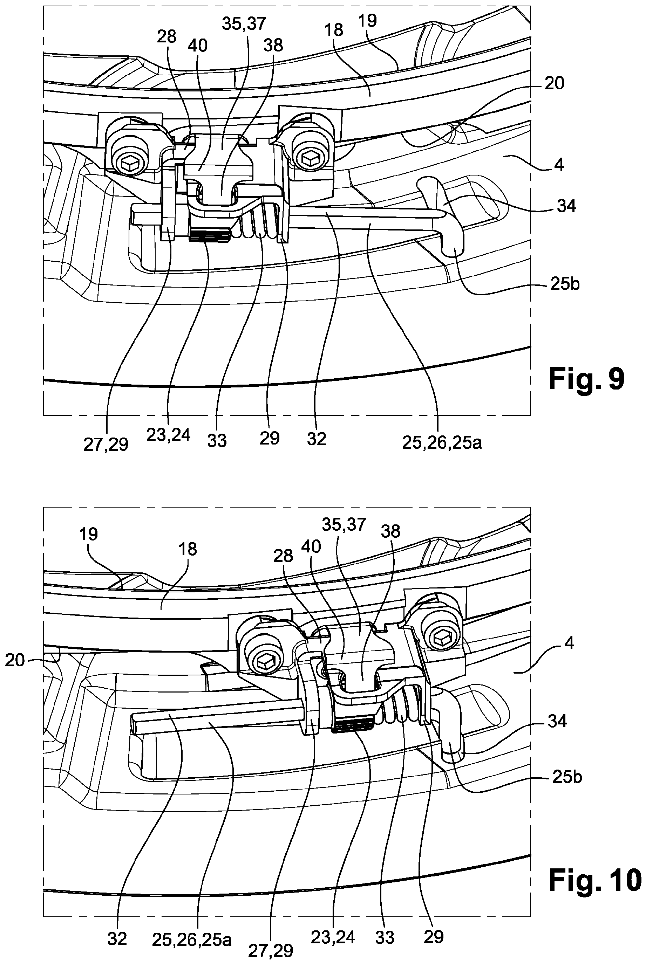

Les figures 9 et 10 représentent la position de la tige filetée 25 et de l'organe de rattrapage 18 par rapport au plateau de pression 4, respectivement en l'absence d'usure du disque de friction 5 et pour un disque de friction 5 usé.

Les figures 11 à 23 illustrent un mécanisme d'embrayage et un dispositif 1 d'embrayage selon une seconde forme de réalisation de l'invention.

Dans cette forme de réalisation, la roue à rochet 23 est maintenue en appui sur les flancs 29 de la cassette 27, sans interposition d'un élément élastique 33. En d'autres termes, la roue à rochet 23 est apte à venir en appui sur les flancs 29 de la cassette 27, éventuellement par l'intermédiaire d'une ou plusieurs rondelles de frottement. La base de la cassette 27 est fixée au plateau de pression 4, ici par rivetage par exemple.

Comme précédemment, la première partie 25a de la tige filetée 25 est engagée dans un taraudage de la roue à rochet 23, qui forme ainsi un écrou apte à pivoter autour de son axe, la seconde partie 25b de la tige filetée 25 étant engagée dans une ouverture 41 de l'organe de rattrapage 18. Ladite ouverture 41 est rectiligne et s'étend selon l'axe X. Ladite ouverture 41 est ménagée dans une zone de grande dimension (selon l'axe X) de l'organe de rattrapage 18, c'est-à-dire au niveau d'une extrémité dite basse d'une rampe 21.

La tige filetée 25 est, comme précédemment, arrêtée en rotation par les flancs 29 de la cassette 27, par coopération de forme, par exemple par l'intermédiaire d'un méplat.

Le mécanisme comporte en outre des moyens d'anti-rotation 42 aptes à autoriser la rotation de la roue à rochet 23 dans un unique sens de rotation.

En particulier, les moyens d'anti-rotation 42 comportent deux parties se présentant chacune sous la forme d'une tôle 43, lesdites tôles 43 étant empilées l'une sur l'autre, chaque tôle 43 comportant plusieurs lamelles élastiques 44 adjacentes dont les extrémités libres sont aptes à venir en appui sur la denture 24 de la roue à rochet 23.

Les extrémités desdites lamelles 44 sont maintenues élastiquement en appui sur la denture 24 de la roue à rochet 23, dans des zones situées à des distances différentes l'une de l'autre par rapport à l'axe de rotation de la roue à rochet 23. Lesdites extrémités sont aptes à glisser sur les dents 24, dans un premier sens de rotation de la roue à rochet 23 et sont aptes à bloquer la rotation de la roue à rochet 23 dans un second sens de rotation de la roue à rochet 23, par appui sur les épaulements formés dans le fond des dents 24.

Les tôles 43 sont fixées au plateau de pression 4, par exemple par rivetage. De tels moyens d'anti-rotation 42 peuvent également être prévus dans la forme de réalisation décrit en référence aux figures 1 à 10. Par ailleurs, le mécanisme selon la seconde forme de réalisation peut être dépourvu de tels moyens d'anti-rotation 42.

Le cliquet 35 comporte un corps 45 s'étendant radialement fixé, par exemple par rivetage, sur la partie annulaire radiale du couvercle 2, et une languette d'actionnement 46 s'étendant axialement depuis le corps, en direction de la roue à rochet 23 (figure 17).

L'extrémité libre de la languette d'actionnement 46 forme une zone d'actionnement 39 apte à coopérer avec la denture 24 de la roue à rochet 23. L'élasticité du cliquet 35 maintient la zone d'actionnement 39 en appui sur la denture 24.

Par ailleurs, le cliquet 35 comporte une portion d'appui 47 s'étendant radialement depuis le corps 45 du cliquet 35, en direction du diaphragme 10. La portion d'appui 47 est décalée radialement vers l'intérieur par rapport à la zone d'actionnement 39. La portion d'appui 47 est apte à prendre appui sur le diaphragme 10, en particulier sur la périphérie radialement externe du diaphragme 10.

La portion d'appui 47 est réglable selon l'axe X du mécanisme pour définir la position angulaire du diaphragme 10 par rapport au couvercle 2 en position embrayée, le système de rattrapage d'usure étant dans une position stabilisée.

En variante, la portion d'appui 10 est apte à prendre appui sur les moyens à rampe, en particulier sur l'organe de rattrapage 18.

Le fonctionnement du mécanisme va maintenant être décrit en référence aux figures 17 à 21. Sur ces figures, les moyens d'anti-rotation 42 ne sont pas représentés.

La figure 17 représente le mécanisme en position embrayée et à l'état neuf. Dans cette position, l'extrémité libre 39 de la languette d'actionnement 46 est maintenue élastiquement en appui sur la denture 24 de la roue à rochet 23, à l'extrémité d'une dent 24, sans toutefois sauter la dent 24.

Lors de la phase de débrayage (figures 18 et 19), la butée d'embrayage exerce un effort F sur l'extrémité radialement interne des doigts 12. Le diaphragme 10 étant articulé autour des zones d'appui 13 du couvercle 2, la périphérie radialement externe du diaphragme 10 vient en appui sur la portion d'appui 47 du cliquet 35, de façon à l'actionner.

Lors du débrayage, le cliquet 35 glisse sur la roue à rochet 23 de la valeur d'une dent, jusqu'à la mise en contact de la butée 47 avec le diaphragme 10. Le cliquet 35 est alors entraîné par le plateau de pression 4 de sorte qu'il n'y a plus de mouvement relatif entre la zone d'actionnement 46 du cliquet 35 et la roue à rochet 23. Il n'y a plus de rotation possible de la roue à rochet 23. Le plateau de pression 4 est relâché en phase de débrayage de sorte que celui-ci s'écarte du plateau de réaction 3 par l'action des languettes élastiques de rappel 17. Les mouvements relatifs permettent de maintenir la zone d'actionnement 39 du cliquet 35 sur la même dent 24 de la roue à rochet 23.

La figure 18 illustre le mécanisme en cours de débrayage et la figure 19 illustre le mécanisme en position complètement débrayée. Dans tous les cas, lors du débrayage, la languette d'actionnement 46 est maintenue élastiquement en appui sur la denture 24 de la roue à rochet 23, sans sauter de dent 24.

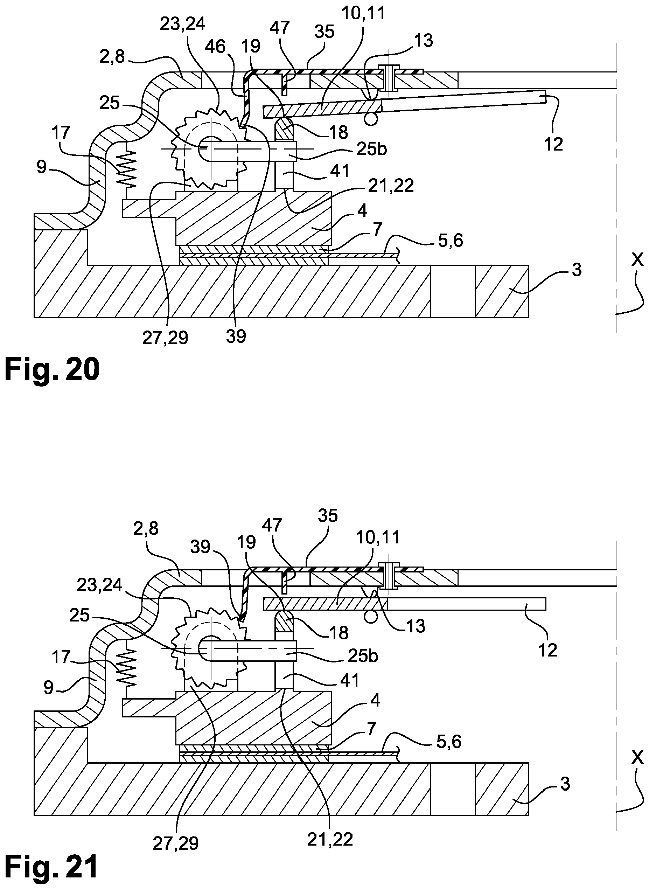

Après une usure suffisante du disque de friction 5 et en position embrayée, l'extrémité 39 de la languette d'actionnement 46 saute une dent 24, comme illustré à la figure 20. Ainsi, lors de la phase de débrayage suivante, la roue à rochet est entraînée en rotation par appui de l'extrémité 39 dans l'épaulement formé dans le fond de la dent 24 correspondante. La rotation de la roue à rochet lors de cette phase de débrayage entraîne le déplacement de la tige filetée et, ainsi, la rotation de l'organe de rattrapage 18, du fait de la liaison au niveau de la partie 25b de la tige filetée 25 et de l'ouverture 41 de l'organe de rattrapage d'usure 18.

Une telle rotation de l'organe de rattrapage 18 par rapport au plateau de pression 4 provoque un coulissement des rampes 21 sur les contre-rampes 22 et, ainsi, un écartement selon l'axe X du diaphragme 10 par rapport au plateau de pression 4, d'une valeur permettant de compenser l'usure.

Lors d'une telle rotation de l'organe de rattrapage 18 par rapport au plateau de pression 4, la seconde partie 25b de la tige filetée 25 se déplace par rapport à l'ouverture 41 de l'organe de rattrapage d'usure 18.

La figure 21 illustre le mécanisme à l'issue de cette phase de rattrapage d'usure.

Les figures 22 et 23 représentent la position de la tige filetée 25 et de l'organe de rattrapage 18 par rapport au plateau de pression 4, respectivement en l'absence d'usure du disque de friction 5 et pour un disque de friction 5 usé.

## Revendications

1. Mécanisme d'embrayage, notamment pour véhicule automobile, comportant :
- un couvercle (2),
- un plateau de pression (4) mobile par rapport au couvercle (2) selon un axe (X) du mécanisme, et destiné à coopérer avec un disque de friction (5),
- un diaphragme (10) mobile entre une position embrayée et une position débrayée, apte à actionner le déplacement du plateau de pression (3),
- des moyens de rattrapage d'usure intercalés entre le diaphragme et le plateau de pression, lesdits moyens de rattrapage comportant des moyens à rampe (18, 21) coopérant avec des moyens à contre-rampe (4, 22) de façon à ce que la rotation des moyens à rampe (18, 21) par rapport aux moyens à contre-rampe (4, 22) modifie la distance entre le diaphragme (10) et le plateau de pression (3), et des moyens d'entraînement en rotation des moyens à rampe (18), lesdits moyens d'entraînement comportant un écrou (23) coopérant avec une tige filetée (25) selon un axe principal (L), **caractérisé en ce que** l'écrou (23) est lié aux moyens à rampe (18), ou respectivement au plateau de pression (4), et apte à pivoter autour de son axe principal (L), la tige filetée (25) étant insérée dans le plateau de pression (4) ou respectivement dans les moyens à rampe (18), de façon à entraîner la rotation des moyens à rampe (18) par rapport au plateau de pression (4), par rotation de l'écrou (23) autour de la tige filetée (25), la tige filetée étant fixe en rotation selon l'axe principal (L).

2. Mécanisme selon la revendication 1, **caractérisé en ce que** l'écrou (23) est monté dans une cassette (27) fixée sur les moyens à rampe (18) ou sur le plateau de pression (4).

3. Mécanisme selon la revendication 2, **caractérisé en ce que** la cassette (27) comporte une base (28) à partir de laquelle s'étendent deux flancs (29) écartés circonférentiellement l'un par rapport à l'autre, l'écrou (23) étant monté circonférentiellement entre les flancs (29) de la cassette. (27)

4. Mécanisme selon la revendication 2 ou 3, **caractérisé en ce que** la tige (25) est arrêtée en rotation par la cassette (27).

5. Mécanisme selon les revendications 3 et 4, **caractérisé en ce que** la tige filetée (25) est arrêtée en rotation par coopération de forme entre la tige filetée (25) et au moins l'un des flancs (29) de la cassette (27).

6. Mécanisme selon la revendication 5, **caractérisé en ce que** la coopération de forme est réalisée à l'aide d'un méplat ou d'un doigt engagé dans une rainure.

7. Mécanisme selon l'une des revendications 1 à 6, **caractérisé en ce que** l'écrou (23) comprend des moyens d'entraînement formés à sa périphérie externe, les moyens d'entraînement de l'écrou comportant une roue à rochet (23) coopérant avec des moyens d'encliquetage (35), lesdits moyens d'encliquetage (35) étant aptes à actionner la rotation de la roue à rochet (23) en cas d'usure du disque de friction (5).

8. Mécanisme selon la revendication 7, **caractérisé en ce que** les moyens d'encliquetage comportent un organe élastique (35) comprenant une zone d'actionnement (39) maintenue en appui sur une denture (24) de la roue à rochet (23).

9. Mécanisme selon l'une des revendications 7 ou 8, **caractérisé en ce que** la tige filetée (25) passe au travers de la roue à rochet (23).

10. Mécanisme selon l'une des revendications 1 à 9, **caractérisé en ce qu'**il comporte des moyens d'anti-rotation (42) aptes à autoriser la rotation de l'écrou (23) et/ou de la roue à rochet (23) dans un unique sens de rotation.

11. Mécanisme selon la revendication 10, **caractérisé en ce que** les moyens d'anti-rotation (42) comportent au moins deux lamelles élastiques (44), maintenues en appui sur la denture (24) de la roue à rochet (23), dans des zones situées à des distances différentes l'une de l'autre par rapport à l'axe de rotation de la roue à rochet (23).

12. Mécanisme selon l'une des revendications 1 à 11, **caractérisé en ce que** la tige filetée (25) comporte une partie (25b) engagée dans une rainure (34) du plateau de pression (4), ladite rainure (34) s'étendant dans la direction radiale par rapport à l'axe de rotation (X) des moyens à rampe (18).

13. Mécanisme selon l'une des revendications 1 à 11, **caractérisé en ce que** la tige filetée (25) comporte une partie (25b) engagée dans une ouverture (41) des moyens à rampe (18).

14. Mécanisme selon la revendication 13, **caractérisé en ce que** la tige filetée (25) présente une portion coudée (25b), ladite portion coudée (25b) étant insérée dans l'ouverture (41) des moyens à rampe (18).

15. Mécanisme selon l'une des revendications 13 ou 14 **caractérisé en ce que** ladite ouverture (41) des moyens à rampe (18) s'étend selon l'axe de rotation (X) des moyens à rampe (18).

## Patentansprüche

1. Kupplungsmechanismus, insbesondere für ein Kraftfahrzeug, der aufweist:
- einen Deckel (2),
- eine Druckplatte (4), die bezüglich des Deckels (2) gemäß einer Achse (X) des Mechanismus beweglich und dazu bestimmt ist, mit einer Reibscheibe (5) zusammenzuwirken,
- eine zwischen einer eingerückten und einer ausgerückten Stellung bewegliche Membran (10), die die Verschiebung der Druckplatte (3) in Gang setzen kann,
- zwischen die Membran und die Druckplatte eingefügte Verschleißnachstelleinrichtungen, wobei die Nachstelleinrichtungen Rampeneinrichtungen (18, 21), die mit Gegenrampeneinrichtungen (4, 22) zusammenwirken, damit die Drehung der Rampeneinrichtungen (18, 21) bezüglich der Gegenrampeneinrichtungen (4, 22) den Abstand zwischen der Membran (10) und der Druckplatte (3) verändert, und Drehantriebseinrichtungen der Rampeneinrichtungen (18) aufweisen, wobei die Antriebseinrichtungen eine Mutter (23) aufweisen, die gemäß einer Hauptachse (L) mit einer Gewindestange (25) zusammenwirkt,
**dadurch gekennzeichnet, dass** die Mutter (23) mit den Rampeneinrichtungen (18) bzw. mit der Druckplatte (4) verbunden und fähig ist, um ihre Hauptachse (L) zu schwenken, wobei die Gewindestange (25) in die Druckplatte (4) bzw. in die Rampeneinrichtungen (18) eingeführt ist, um die Drehung der Rampeneinrichtungen (18) bezüglich der Druckplatte (4) durch Drehung der Mutter (23) um die Gewindestange (25) zu bewirken, wobei die Gewindestange gemäß der Hauptachse (L) in Drehung fest ist.

2. Mechanismus nach Anspruch 1, **dadurch gekennzeichnet, dass** die Mutter (23) in eine Kassette (27) montiert ist, die an den Rampeneinrichtungen (18) oder an der Druckplatte (4) befestigt ist.

3. Mechanismus nach Anspruch 2, **dadurch gekennzeichnet, dass** die Kassette (27) eine Basis (28) aufweist, von der ausgehend sich zwei Flanken (29) erstrecken, die in Umfangsrichtung voneinander entfernt sind, wobei die Mutter (23) in Umfangsrichtung zwischen den Flanken (29) der Kassette (27) montiert ist.

4. Mechanismus nach Anspruch 2 oder 3, **dadurch gekennzeichnet, dass** die Stange (25) durch die Kassette (27) in Drehung angehalten wird.

5. Mechanismus nach den Ansprüchen 3 und 4, **dadurch gekennzeichnet, dass** die Gewindestange (25) durch Formzusammenwirkung zwischen der Gewindestange (25) und mindestens einer der Flanken (29) der Kassette (27) in Drehung angehalten wird.

6. Mechanismus nach Anspruch 5, **dadurch gekennzeichnet, dass** die Formzusammenwirkung mit Hilfe einer Abflachung oder eines in eine Rille eingeführten Fingers hergestellt wird.

7. Mechanismus nach einem der Ansprüche 1 bis 6, **dadurch gekennzeichnet, dass** die Mutter (23) an ihrem Außenumfang geformte Antriebseinrichtungen enthält, wobei die Antriebseinrichtungen der Mutter ein mit Einrasteinrichtungen (35) zusammenwirkendes Klinkenrad (23) aufweisen, wobei die Einrasteinrichtungen (35) die Drehung des Klinkenrads (23) im Fall des Verschleißes der Reibscheibe (5) in Gang setzen können.

8. Mechanismus nach Anspruch 7, **dadurch gekennzeichnet, dass** die Einrasteinrichtungen ein elastisches Organ (35) aufweisen, das einen Ingangsetzungsbereich (39) enthält, der in Auflage auf einer Zahnung (24) des Klinkenrads (23) gehalten wird.

9. Mechanismus nach einem der Ansprüche 7 oder 8, **dadurch gekennzeichnet, dass** die Gewindestange (25) durch das Klinkenrad (23) verläuft.

10. Mechanismus nach einem der Ansprüche 1 bis 9, **dadurch gekennzeichnet, dass** er Drehhemmungseinrichtungen (42) aufweist, die die Drehung der Mutter (23) und/oder des Klinkenrads (23) nur in einer Drehrichtung erlauben können.

11. Mechanismus nach Anspruch 10, **dadurch gekennzeichnet, dass** die Drehhemmungseinrichtungen (42) mindestens zwei elastische Lamellen (44) aufweisen, die in Auflage auf der Zahnung (24) des Klinkenrads (23) in Bereichen gehalten werden, die sich in unterschiedlichen Abständen zueinander bezüglich der Drehachse des Klinkenrads (23) befinden.

12. Mechanismus nach einem der Ansprüche 1 bis 11, **dadurch gekennzeichnet, dass** die Gewindestange (25) einen Teil (25b) aufweist, der in eine Rille (34) der Druckplatte (4) eingeführt ist, wobei die Rille (34) sich in der radialen Richtung bezüglich der Drehachse (X) der Rampeneinrichtungen (18) erstreckt.

13. Mechanismus nach einem der Ansprüche 1 bis 11, **dadurch gekennzeichnet, dass** die Gewindestange (25) einen Teil (25b) aufweist, der in eine Öffnung (41) der Rampeneinrichtungen (18) eingeführt ist.

14. Mechanismus nach Anspruch 13, **dadurch gekennzeichnet, dass** die Gewindestange (25) einen gebogenen Abschnitt (25b) aufweist, wobei der gebogene Abschnitt (25b) in die Öffnung (41) der Rampeneinrichtungen (18) eingeführt ist.

15. Mechanismus nach einem der Ansprüche 13 oder 14, **dadurch gekennzeichnet, dass** die Öffnung (41) der Rampeneinrichtungen (18) sich gemäß der Drehachse (X) der Rampeneinrichtungen (18) erstreckt.

## Claims

1. clutch mechanism, notably for a motor vehicle, comprising:
- a cover (2),
- a pressure plate (4) able to move with respect to the cover (2) along an axis (X) of the mechanism, and intended to collaborate with a friction disc (5),
- a diaphragm (10) able to move between a clutch-engaged position and a clutch-disengaged position, able to actuate the movement of the pressure plate (3),
- where compensation means interposed between the diaphragm and the pressure plate, the said compensation means comprising ramp means (18, 21) collaborating with counter-ramp means (4, 22) so that rotation of the ramp means (18, 21) with respect to the counter ramp means (4, 22) alters the distance between the diaphragm (10) and the pressure plate (3), and rotational-drive means of the ramp means (18), the said drive means comprising a nut (23) collaborating with a threaded rod (25) along a main axis (L), **characterized in that** the nut (23) is connected to the ramp means (18) or, respectively, to the pressure plate (4), and able to pivot about its main axis (L), the threaded rod (25) being inserted in the pressure plate (4) or, respectively, in the ramp means (18) so as to drive the rotation of the ramp means (18) with respect to the pressure plate (4) by rotation of the nut (23) about the threaded rod (25), the threaded rod being fixed in terms of rotation about the main axis (L).

2. Mechanism according to Claim 1, **characterized in that** the nut (23) is mounted in a cassette (27) fixed to the ramp means (18) or to the pressure plate (4).

3. Mechanism according to Claim 2, **characterized in that** the cassette (27) comprises a base (28) in which there extends two side walls (29) which are circumferentially separated from one another, the nut (23) being mounted circumferentially between the side walls (29) of the cassette (27).

4. Mechanism according to Claim 2 or 3, **characterized in that** the rod (25) is stopped from rotating by the cassette (27).

5. Mechanism according to Claim 3 and 4, **characterized in that** the threaded rod (25) is stopped from rotating by the collaboration of shapes between the threaded rod (25) and at least one of the side walls (29) of the cassette (27).

6. Mechanism according to Claim 5, **characterized in that** the collaboration of shapes is achieved by means of a flat or of a finger engaged in a slot.

7. Mechanism according to one of Claims 1 to 6, **characterized in that** the nut (23) comprises drive means formed at its external periphery, the drive means of the nut comprising a ratchet wheel (23) collaborating with pawl means (35), the said pawl means (35) being able to actuate rotation of the ratchet wheel (23) in the event of wearing of the friction disc (5) .

8. Mechanism according to Claim 7, **characterized in that** the pawl means comprise an elastic member (35) comprising an actuating zone (39) kept pressed against a toothset (24) of the ratchet wheel (23).

9. Mechanism according to one of Claims 7 or 8, **characterized in that** the threaded rod (25) passes through the ratchet wheel (23).

10. Mechanism according to one of Claims 1 to 9, **characterized in that** it comprises rotation-preventing means (42) able to allow the nut (23) and/or the ratchet wheel (23) to rotate in just one direction of rotation.

11. Mechanism according to Claim 10, **characterized in that** the rotation-preventing means (42) comprise at least two elastic leads (44) kept pressed against the toothset (24) of the ratchet wheel (23) in regions situated at mutually different distances from the axis of rotation of the ratchet wheel (23).

12. Mechanism according to one of Claims 1 to 11, **characterized in that** the threaded rod (25) comprises a part (25b) engaged in a slot (34) in the pressure plate (4), the said slot (34) extending in the radial direction with respect to the axis of rotation (X) of the ramp means (18).

13. Mechanism according to one of Claims 1 to 11, **characterized in that** the threaded rod (25) comprises a part (25b) engaged in an opening (41) of the ramp means (18).

14. Mechanism according to Claim 13, **characterized in that** the threaded rod (25) has a bent portion (25b), said bent portion (25b) being inserted into the opening (41) of the ramp means (18).

15. Mechanism according to one of Claims 13 and 14, **characterized in that** the said opening (41) of the ramp means (18) extends along the axis of rotation (X) of the ramp means (18).
